# EUROPÄISCHE PATENTSCHRIFT

(11) **EP 2 257 443 B1**
(45) Veröffentlichungstag und Bekanntmachung des Hinweises auf die Patenterteilung: **11.11.2015**
(21) Anmeldenummer: 09727201.7
(22) Anmeldetag: 12.02.2009
(51) Int. Cl.: B60J 5/06

(54) **SCHIEBETÜRE FÜR EIN FAHRZEUG**
SLIDING DOORS FOR A VEHICLE
PORTIÈRE COULISSANTE POUR UN VÉHICULE

(30) Priorität: 01.04.2008 DE 102008016650
(43) Veröffentlichungstag der Anmeldung: 08.12.2010
(73) Patentinhaber: DURA Automotive Body & Glass Systems GmbH, 58840 Plettenberg (DE)
(72) Erfinder: HEUEL, Gerhard, 57462 Olpe (DE); KREHMKE, Michael, 58840 Plettenberg (DE); ROTTMANN, Ralf, 57489 Drolshagen (DE)
(74) Vertreter: Zinnecker, Armin
(86) Internationale Anmeldenummer: PCT/EP2009/000993
(87) Internationale Veröffentlichungsnummer: WO 2009/121451

(56) Entgegenhaltungen:
- DE-A1-102004 039 885
- FR-A- 2 880 842
- JP-A- 9 277 833
- US-A1- 2006 267 375
- US-A1- 2009 051 194

## Beschreibung

Die Erfindung betrifft eine Schiebetüre für ein Fahrzeug, insbesondere für ein Kraftfahrzeug.

Aus der EP 1 721 768 A1 ist eine Schiebetüre für Kraftfahrzeuge bekannt, die an ihrer Innenseite eine Führungsschiene aufweist. An der Führungsschiene ist ein Gleitschlitten längsverschieblich gelagert. Ferner umfaßt die Schiebetüre einen Scharnierbügel, der an dem Gleitschlitten und an einem Karosserieflansch oder einem sonstigen Karosserierteil drehbar gelagert ist.

Die prioritätsälteren, nicht vorveröffentlichten deutschen Patentanmeldungen 10 2007 035 230.3 und 10 2007 035 231.1 zeigen ebenfalls Schiebetüren für Kraftfahrzeuge.

Eine Schiebetüre für ein Fahrzeug nach dem Oberbegriff des Anspruchs 1 ist aus der US 2006/267375 A1 bekannt.

Aufgabe der Erfindung ist es, eine verbesserte Schiebetüre für ein Fahrzeug, insbesondere für ein Kraftfahrzeug, vorzuschlagen.

Erfindungsgemäß wird diese Aufgabe durch die Merkmale des Anspruchs 1 gelöst. Die Schiebetüre umfaßt eine Führungsschiene. An der Führungsschiene ist ein Gleitschlitten längsverschieblich gelagert. Die Schiebetüre umfaßt ferner einen Scharnierbügel, der an dem Gleitschlitten und an einem Karosserieflansch drehbar gelagert ist, und einen Steuerhebel, der an dem Gleitschlitten und an einem oder dem Karosserieflansch oder sonstigen Karosserieteil drehbar gelagert ist, sowie einen ersten Zwischenhebel, der an dem Steuerhebel drehbar gelagert ist, und einen zweiten Zwischenhebel, der an dem ersten Zwischenhebel und an dem Gleit-schlitten drehbar gelagert ist. Der erste Zwischenhebel und der zweite Zwischenhebel können einen Kniehebel bilden. Vorzugsweise weist der Kniehebel, bezogen auf das Fahrzeug oder Kraftfahrzeug, nach innen.

Der Steuerhebel weist eine Verlängerung auf, an der der erste Zwischenhebel drehbar gelagert ist.

Vorteilhafte Weiterbildungen sind in den Unteransprüchen beschrieben.

Vorzugsweise ist die Schiebetüre an dem dem Scharnierbügel abgewandten Ende arretierbar. Zu diesem Zweck kann an dem Fahrzeug ein Scharnierbolzen für eine Aufnahme an der Schiebetüre vorgesehen sein. Der Scharnierbolzen befindet sich vorzugsweise in dem dem Scharnierbügel abgewandten Bereich der Türöffnung. Die Aufnahme, die vorzugsweise U-förmig ist, ist vorzugsweise an dem dem Scharnierbügel in der geschlossenen Stellung der Schiebetüre abgewandten Ende der Schiebetüre vorgesehen. In der geschlossenen Stellung der Schiebetüre kann der Scharnierbolzen in der Aufnahme arretiert werden. Die Anordnung kann allerdings auch umgekehrt getroffen sein, also in der Weise, daß der Scharnierbolzen an der Schiebetüre und die Aufnahme an dem Fahrzeug vorgesehen sind.

Eine weitere vorteilhafte Weiterbildung ist dadurch gekennzeichnet, daß an dem Verbindungsgelenk des ersten Zwischenhebels und des zweiten Zwischenhebels ein Führungsstift vorgesehen ist, der in einer an der Schiebetüre vorgesehenen Führungsbahn geführt ist.

Vorteilhaft ist es, wenn die Führungsbahn relativ zur Führungsschiene geneigt verläuft. Hierdurch kann die Position des Führungsstifts und damit des Gleitschlittens relativ zur Führungsschiene definiert werden. Die Führungsbahn verläuft vorzugsweise durchgehend geneigt, also derart geneigt, daß überall eine von Null verschiedene Neigung vorhanden ist und daß diese Neigung überall in dieselbe Richtung weist. Vorteilhaft ist es, wenn die Führungsbahn in Richtung von dem Scharnierbügel weg nach außen geneigt verläuft. Die Neigung der Führungsbahn kann über ihre gesamte Länge gleich groß sein. Es ist allerdings auch möglich, daß die Führungsbahn Abschnitte mit unterschiedlich großer Neigung aufweist.

Ausführungsbeispiele der Erfindung werden nachstehend anhand der beigefügten Zeichnung im einzelnen erläutert. In der Zeichnung zeigt
- Fig. 1a: eine Ausführungsform einer Schiebetüre für ein Kraftfahrzeug mit einer durchgehend linearen Führungsbahn in der geschlossenen Stellung in einer schematischen Ansicht von oben,
- Fig. 1b-d: die Öffnungsbewegung der Schiebetüre gemäß Fig. 1 a von der geschlossenen Stellung in die geöffnete Stellung,
- Fig. 1e: die Schiebetüre gemäß Fig. 1 a-d in der vollständig geöffneten Stellung,
- Fig. 2a-e: Teile der Darstellungen der Fig. 1a-e in einem vergrößerten Maßstab,
- Fig. 3a-e: die Öffnungsbewegung einer Abwandlung der Schiebetüre gemäß Fig. 1 und 2 mit einer Führungsbahn, die Abschnitte mit unterschiedlich großer Neigung aufweist, von der geschlossenen Stellung in die geöffnete Stellung,
- Fig. 4a-e: Teile der Darstellungen der Fig. 3a-e in einem vergrößerten Maßstab,
- Fig. 5a-e: eine Abwandlung der Schiebetüre gemäß Fig. 3 und 4 mit einem einteiligen Scharnierbügel und einem zweiteiligen Steuerhebel von der geschlossenen Stellung in die geöffnete Stellung und
- Fig. 6a-e: Teile der Darstellungen der Fig. 5a-e in einem vergrößerten Maßstab.

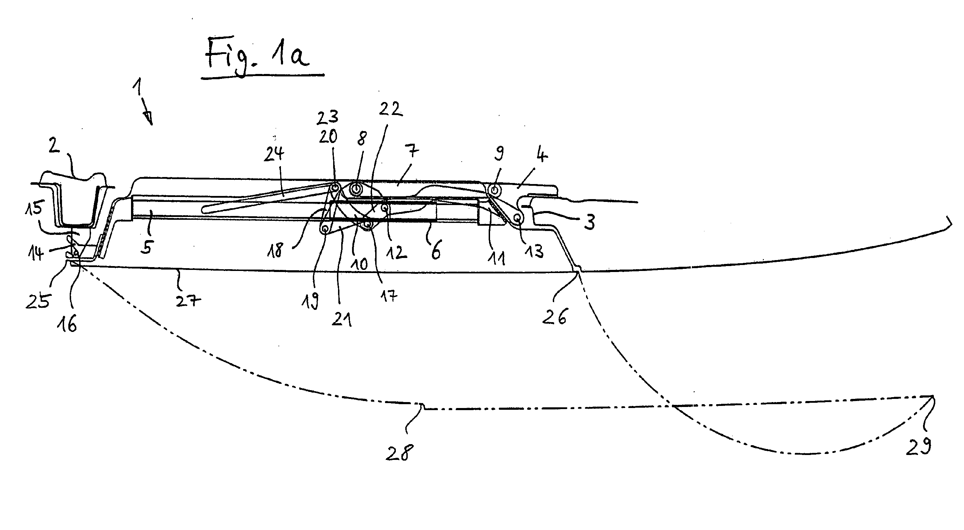

In Fig. 1a, 2a, 3a, 4a, 5a und 6a befindet sich die Schiebetüre 1 in der vollständig geschlossenen Stellung. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 und einen Steuerhebel 11 auf. Der Scharnierbügel 7 ist an dem Gleitschlitten 6 um ein Gelenk 8 und an dem Karosserieflansch 4 um ein Gelenk 9 drehbar gelagert. Der Steuerhebel 11 ist an dem Gleitschlitten 6 um ein Gelenk 12 und an dem Karosserieflansch 4 um ein Gelenk 13 drehbar gelagert.

An dem Steuerhebel 11 ist ein erster Zwischenhebel 10 drehbar gelagert, und zwar um die Achse eines Gelenks 17. An dem Gleitschlitten 6 ist ein zweiter Zwischenhebel 18 drehbar gelagert, und zwar um die Achse eines Gelenks 19. Das Gelenk 19 liegt im äußeren Bereich des Gleitschlittens 6. Es liegt im Bereich des vorderen Endes des Gleitschlittens 6. Die von den Gelenken 17, 19 abgewandten Enden der Zwischenhebel 10, 18 sind durch ein Gelenk 20 drehbar miteinander verbunden. Der erste Zwischenhebel 10 und der zweite Zwischenhebel 18 bilden einen Kniehebel. Da das Verbindungsgelenk 20 der Zwischenhebel 10, 18 in Bezug auf das Kraftfahrzeug weiter innen liegt als die Gelenke 17, 19, weist der von den Zwischenhebeln 10, 18 gebildete Kniehebel in Bezug auf das Kraftfahrzeug nach innen.

An dem Gleitschlitten 6 ist eine Gelenkplatte 21 befestigt, die die Gelenke 8, 12 und 19 trägt. Der Scharnierbügel 7, der Steuerhebel 11, der Gleitschlitten 6 bzw. die Gelenkplatte 21 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Aufnahme 14 vorgesehen, die geneigt zur Fahrzeug-Längsrichtung verläuft, nämlich in Fahrzeugrichtung nach vorne nach innen. Sie ist an ihrem dem Scharnierbügel 7 abgewandten, im Ausführungsbeispiel also vorderen inneren Ende offen. An einem Karosserieflansch 15, der an der B-Säule 2 befestigt ist, ist ein Scharnierbolzen 16 vorgesehen, der in die U-förmige Aufnahme 14 eingreift. In der in Fig. 1a gezeigten, vollständig geschlossenen Stellung der Schiebetüre befindet sich der Scharnierbolzen 16 am Grund der U-förmigen Aufnahme 14. Er kann dort arretiert werden (in der Zeichnung nicht dargestellt).

Der Steuerhebel 11 weist eine Verlängerung 22 auf, die sich von dem Gelenk 12 nach außen erstreckt. Die Verlängerung 22 verlängert den Steuerhebel 11 längs der Verbindungslinie von dem Gelenk 13 zu dem Gelenk 12 über das Gelenk 12 hinaus. Dabei knickt die Verlängerung 22 gegenüber der Verbindungslinie zwischen den Gelenken 13 und 12, also der Längserstreckung des Steuerhebels 11, geringfügig nach außen bzw. hinten ab. An dem Steuerhebel 11 ist im Bereich des äußeren Endes der Verlängerung 22 das Gelenk 17 für den ersten Zwischenhebel 10 vorgesehen.

An dem Verbindungsgelenk 20 des ersten Zwischenhebels 10 und des zweiten Zwischenhebels 18 ist ein Führungsstift 23 vorgesehen, der in einer Führungsbahn 24 geführt ist. Die Führungsbahn 24 ist an der Schiebetüre 1 vorgesehen. Dementsprechend ist die Führungsbahn 24 also eine türfeste Führungsbahn. Sie verläuft relativ zur Führungsschiene 5 in Richtung von dem Scharnierbügel 7 weg nach außen geneigt. Die Führungsbahn 24 ist durchgehend linear ausgestaltet. Ihre Neigung ist über ihre gesamte Länge gleich groß.

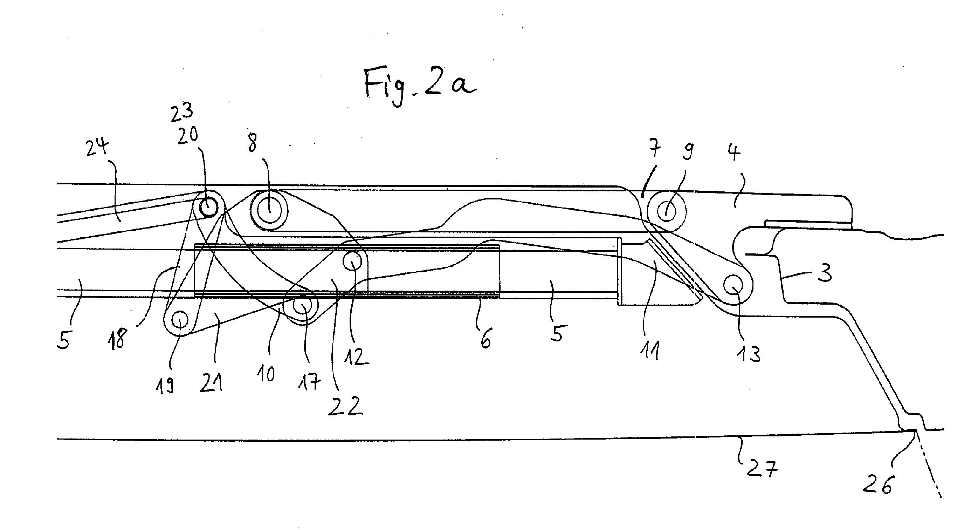

In der vollständig geschlossenen Stellung der Schiebetüre 1, die in Fig. 1a und 2a gezeigt ist, liegt der Scharnierbolzen 16 in der U-förmigen Aufnahme 14, und zwar im Bereich von deren Ende. Der Führungsstift 23 befindet sich im Bereich des hinteren, inneren Endes der Führungsbahn 24. Der erste Zwischenhebel 10 weist von dem Gelenk 17 nach vorne und innen. Der zweite Zwischenhebel 18 weist von dem Gelenk 19 nach hinten und innen.

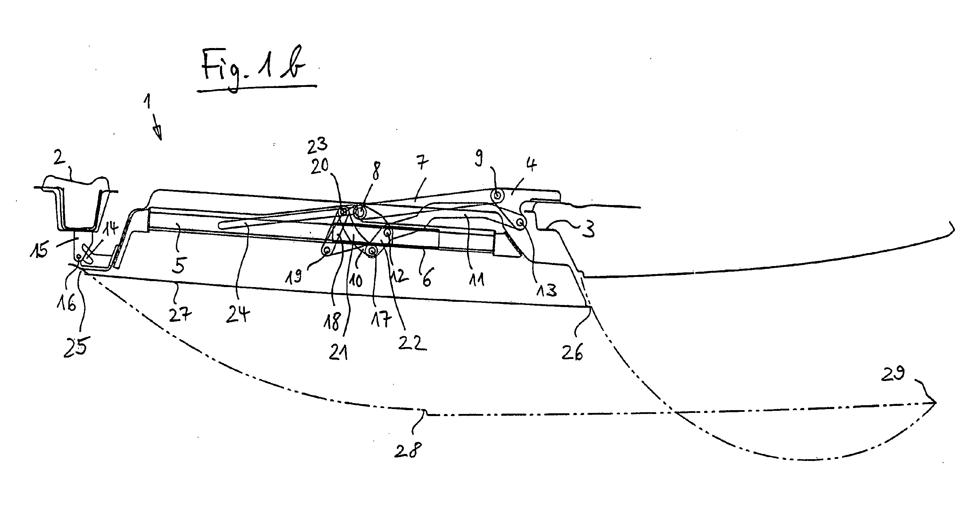

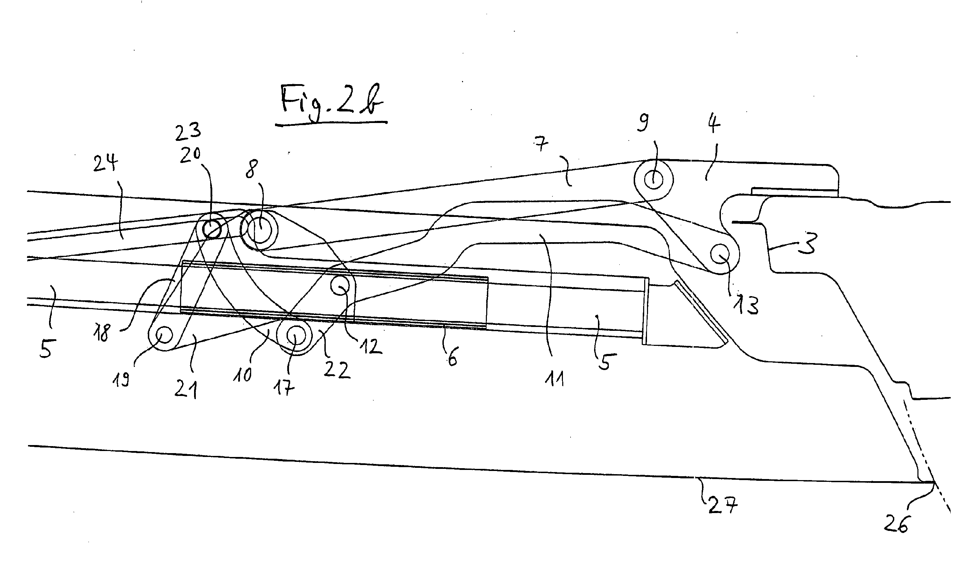

Im Verlauf der Öffnungsbewegung werden anschließend nacheinander die Stellungen nach Fig. 1b bis 1e bzw. die Stellungen nach Fig. 2b bis 2e durchlaufen. Diese Öffnungsbewegung kann dadurch erzeugt werden, daß die Führungsschiene 5 relativ zu dem Gleitschlitten 6 nach hinten bewegt wird. An dem Gleitschlitten 6 kann ein Motor, insbesondere ein Elektromotor, zum Antrieb der Führungsschiene 5 relativ zum Gleitschlitten 6 vorhanden sein. Stattdessen oder zusätzlich kann ein Motor, insbesondere ein Elektromotor, zum Antrieb des Scharnierbügels 7 und/oder des Steuerhebels 11 vorhanden sein. Vorteilhaft ist es, wenn an dem Karosserieflansch 4 oder einem sonstigen Karosserieteil ein Motor zum Antrieb des Scharnierbügels 7 und/oder des Steuerhebels 11 vorhanden ist.

Die Öffnungsbewegung kann allerdings stattdessen oder zusätzlich auch von Hand erzeugt werden. Insbesondere kann die Führungsschiene 5 manuell nach hinten relativ zum Gleitschlitten 6 bewegt werden. Zu diesem Zweck können an der Schiebetüre 1 ein Griff oder mehrere Griffe vorgesehen sein, durch den oder die die Schiebetüre 1 und mit ihr die Führungsschiene 5 relativ zum Gleitschlitten 6 bewegt werden kann. Der Griff kann am inneren vorderen Ende der Schiebetüre 1 und/oder am äußeren vorderen Ende der Schiebetüre 1 und/oder am äußeren hinteren Ende der Schiebetüre 1 vorgesehen sein. Die Schiebetüre 1 kann durch einen Kraftangriff an jeder dieser drei Stellen geöffnet und auch wieder geschlossen werden.

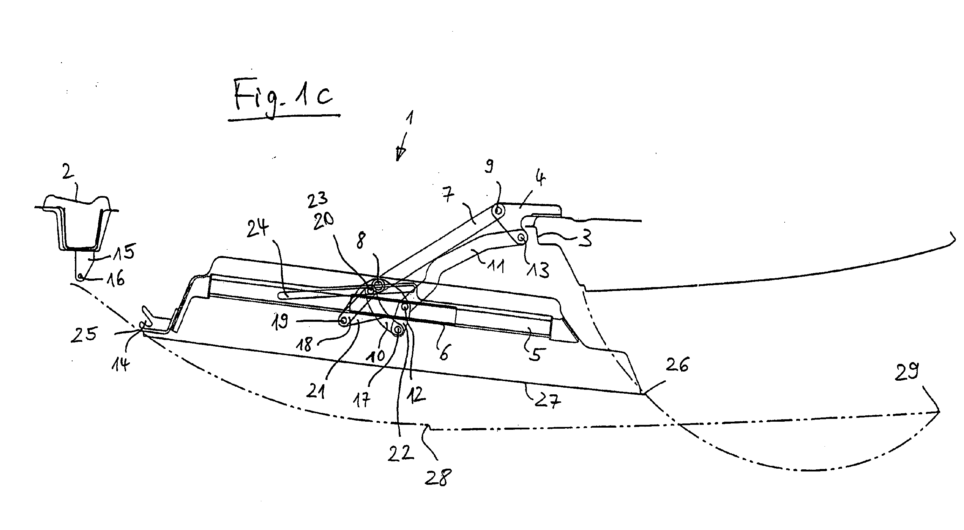

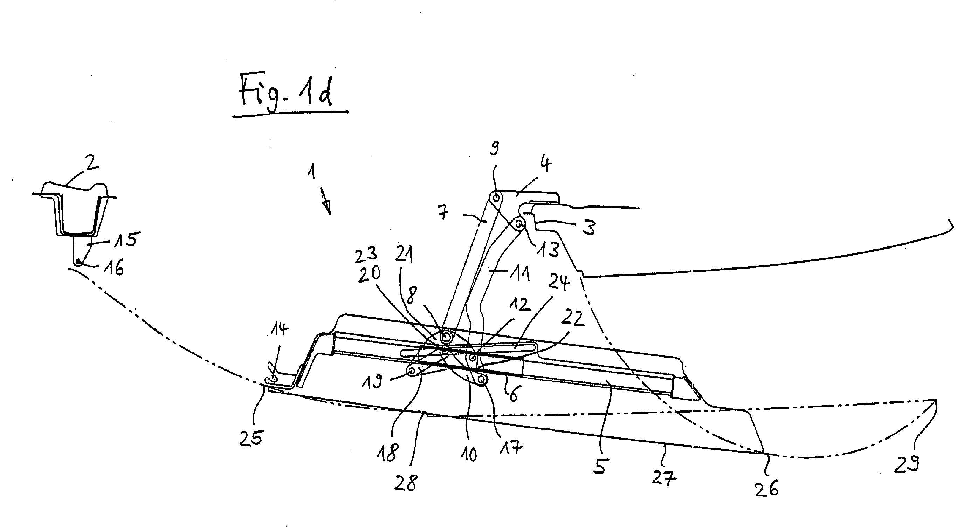

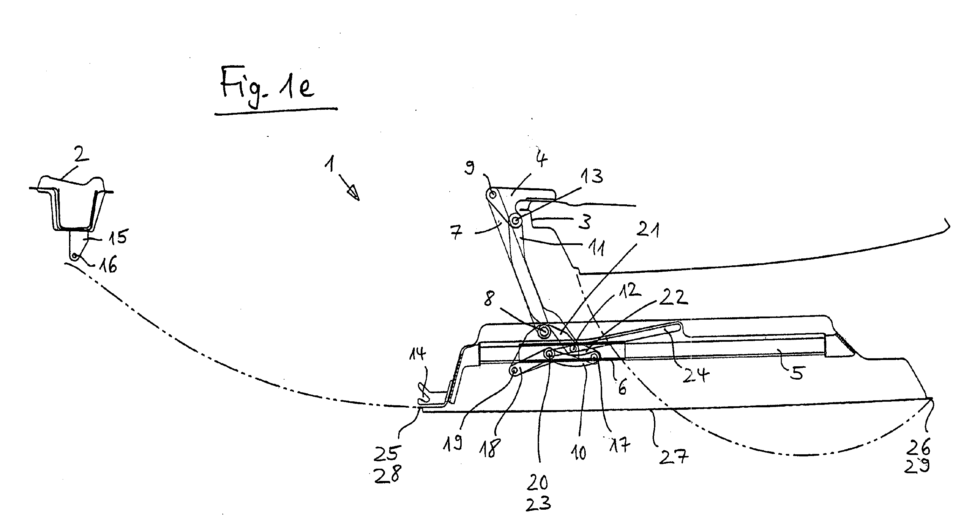

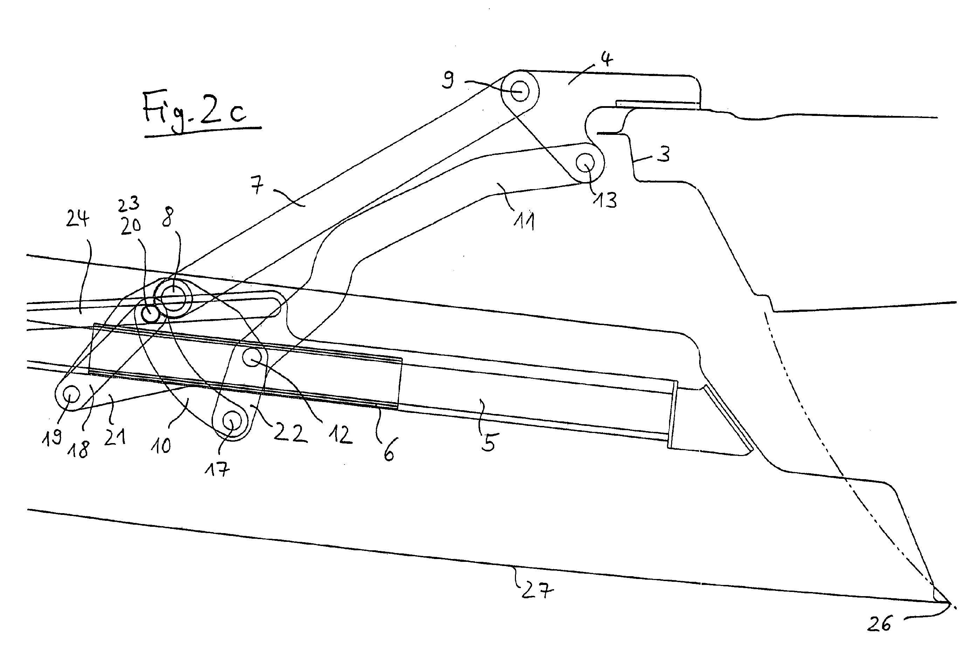

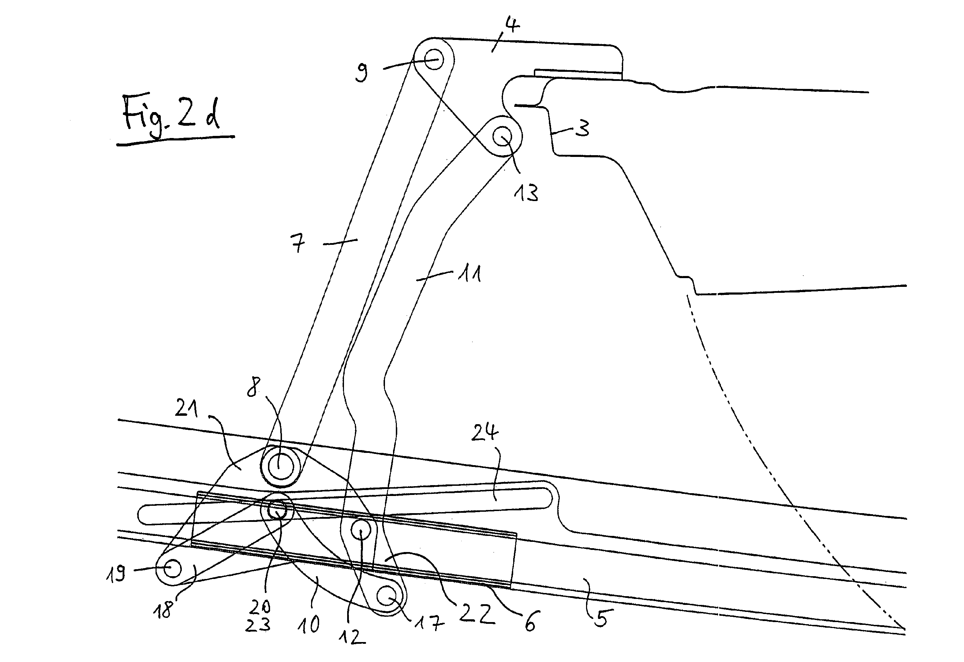

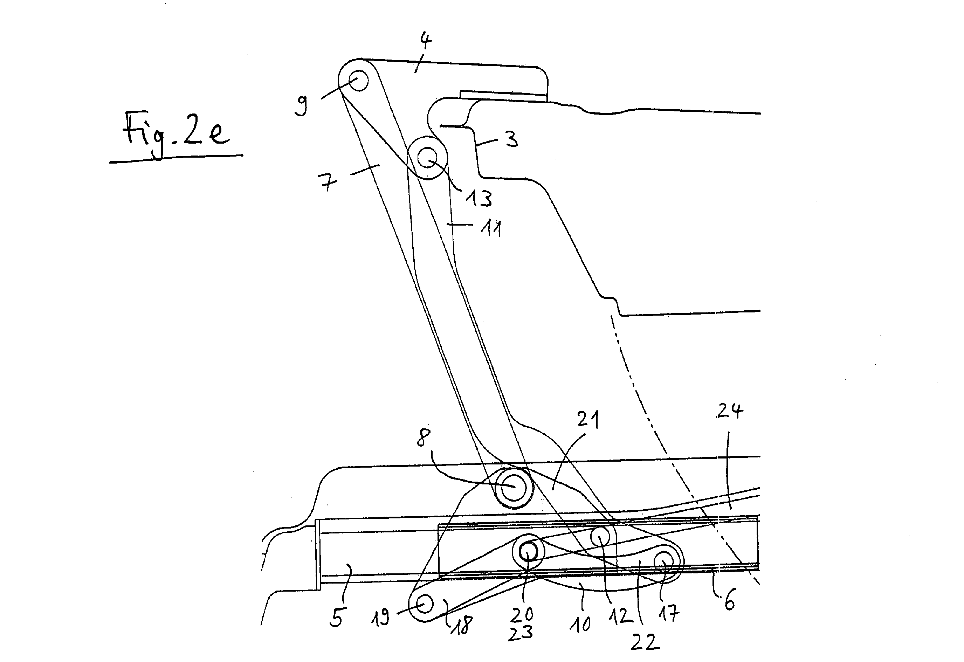

Ohne den Führungsstift 23 könnte der Gleitschlitten 6 auf der Führungsschiene 5 frei verschoben werden. Der in der Führungsbahn 24 geführte Führungsstift 23 verhindert diese freie Verschiebbarkeit und legt die relative Position des Gleitschlittens 6 gegenüber der Führungsschiene 5 und damit gegenüber der Schiebetüre 1 fest. Dies erfolgt in den Abschnitten der Führungsbahn 24, die gegenüber der Führungsschiene 5 eine von Null verschiedene Neigung aufweisen, die also nicht parallel zur Führungsschiene 5 verlaufen. Die Führungsbahn 24 der Ausführungsform nach Fig. 1 und 2 weist auf ihrer gesamten Länge dieselbe von Null verschiedene Neigung gegenüber der Führungsschiene 5 auf.

Wenn die Führungsschiene 5 motorisch und/oder manuell relativ zum Gleitschlitten 6 nach hinten bewegt wird, bewegt sich der in der Führungsbahn 24 geführte Führungsstift 23 relativ zur Führungsschiene 5 und zum Gleitschlitten 6 nach außen, wodurch der zweite Zwischenhebel 18 im Uhrzeigersinn um das Gelenk 19 verschwenkt wird. Durch die Bewegung des Führungsstifts 23 relativ zum Gleitschlitten 6 nach hinten und außen wird das am anderen Ende des ersten Zwischenhebels 10 befindliche Gelenk 17 ebenfalls nach hinten bewegt, wodurch der Steuerhebel 11 entgegen dem Uhrzeigersinn um das Gelenk 12 gedreht wird. Hierdurch wird der Steuerhebel 11 entgegen dem Uhrzeigersinn um das Gelenk 13 an dem Karosserieflansch 4 verschwenkt. Durch die Verschwenkung des Steuerhebels 11 wird auch der Scharnierbügel 7 entgegen dem Uhrzeigersinn um das Gelenk 9 verschwenkt. Die Gelenkplatte 21 des Gleitschlittens 6 wird durch die Verschwenkung des Scharnierbügels 7 um das Gelenk 9 ebenfalls zwangsgeführt, da sie mit dem Scharnierbügel 7, dem Steuerhebel 11 und dem Karosserieflansch 4 - wie ausgeführt - ein Mehrgelenk bildet.

Die Antriebsbewegung für die Öffnung der Schiebetüre 1 kann allerdings auch auf andere Weise eingeleitet werden, insbesondere durch einen motorischen und/oder manuellen Antrieb des Scharnierbügels 7 und/oder des Steuerhebels 11 und/oder des ersten Zwischenhebels 10 und/oder des zweiten Zwischenhebels 18 um eines oder mehrere der Gelenke 9, 8, 13, 12, 17, 20, 19.

Die vollständig geöffnete Stellung der Schiebetüre 1 ist in Fig. 1e und 2e dargestellt. Der erste Zwischenhebel 10 wurde gegenüber der Verlängerung 22 um das Gelenk 17 um etwa 90° im Uhrzeigersinn verschwenkt. Der Führungsstift 23 hat das vordere, geschlossene Ende der Führungsbahn 24 erreicht. Der zweite Zwischenhebel 18 wurde gegenüber dem Gleitschlitten 6 bzw. der Gelenkplatte 21 um das Gelenk 19 um etwa 45° im Uhrzeigersinn verschwenkt. Der Öffnungswinkel der Zwischenhebel 10, 18 an dem Gelenk 20 wurde von etwa 30° auf etwa 150° vergrößert. Der Steuerhebel 11 und der Scharnierbügel 7 wurden um einen Winkel von 120° entgegen dem Uhrzeigersinn um die Gelenke 13 und 9 verschwenkt.

Wenn die Schiebetüre 1 geschlossen werden soll, werden, ausgehend von der vollständig geöffneten Stellung gemäß Fig. 1 e und 2e, die beschriebenen Stellungen in umgekehrter Reihenfolge durchlaufen. Die Schließbewegung der Schiebetüre 1 kann dadurch bewirkt werden, daß die Führungsschiene 5 motorisch und/oder manuell relativ zum Gleitschlitten 6 nach vorne bewegt wird. Die Relativbewegung der Führungsschiene 5 wird durch die Führungsbahn 24 auf den Führungsstift 23 übertragen und von dort über den ersten Zwischenhebel 10 in das beschriebene Mehrgelenk eingeleitet. Es ist allerdings auch möglich, die Schließbewegung in einer Weise einzuleiten, wie sie für die Öffnungsbewegung beschrieben wurde.

In Fig. 1 und 2 sind die Wege des vorderen Endes 25 und des hinteren Endes 26 des äußeren Türblechs 27 eingezeichnet. Das vordere Ende 25 des äußeren Türblechs 27 bewegt sich zunächst in einem Winkel von etwa 30° gegenüber der Fahrzeug-Längsachse nach hinten und außen. Der Neigungswinkel der U-förmigen Aufnahme 14 entspricht diesem Winkel. Es beschreibt anschließend einen Bogen mit einem großen Radius, dessen Ende 28 eine parallel zur Fahrzeug-Längsachse verlaufende Tangente aufweist. Das hintere Ende 26 des äußeren Türblechs 27 bewegt sich zunächst annähernd rechtwinkelig von der Karosserie weg und beschreibt dann einen enger werdenden Bogen bis zu einem Endpunkt 29, der im wesentlichen denselben Abstand von der Karosserie des Fahrzeugs aufweist wie der Endpunkt 28 des vorderen Endes 25.

Durch die Erfindung wird es ermöglicht, die Schiebetüre durch die Einleitung einer einzigen Bewegung zu öffnen und zu schließen. Insbesondere kann die Schiebetüre durch eine Bewegung der Führungsschiene 5 relativ zu dem Gleitschlitten 6 geöffnet und geschlossen werden. Es ist allerdings auch möglich, die Öffnungsbewegung und Schließbewegung der Schiebetüre auf andere Weise zu erzeugen und einzuleiten, wie oben beschrieben. Durch die Erfindung kann ferner eine Schiebetüre realisiert werden, deren bewegliche Teile in einer Richtung quer zur Fahrzeug-Längsachse nur sehr wenig Platz benötigen. Die maximale Breite dieser beweglichen Teile wird vom Abstand zwischen der Lage des Gelenks 20 in der Fig. 1a und der Lage des Gelenks 17 in der Fig. 1 c bestimmt.

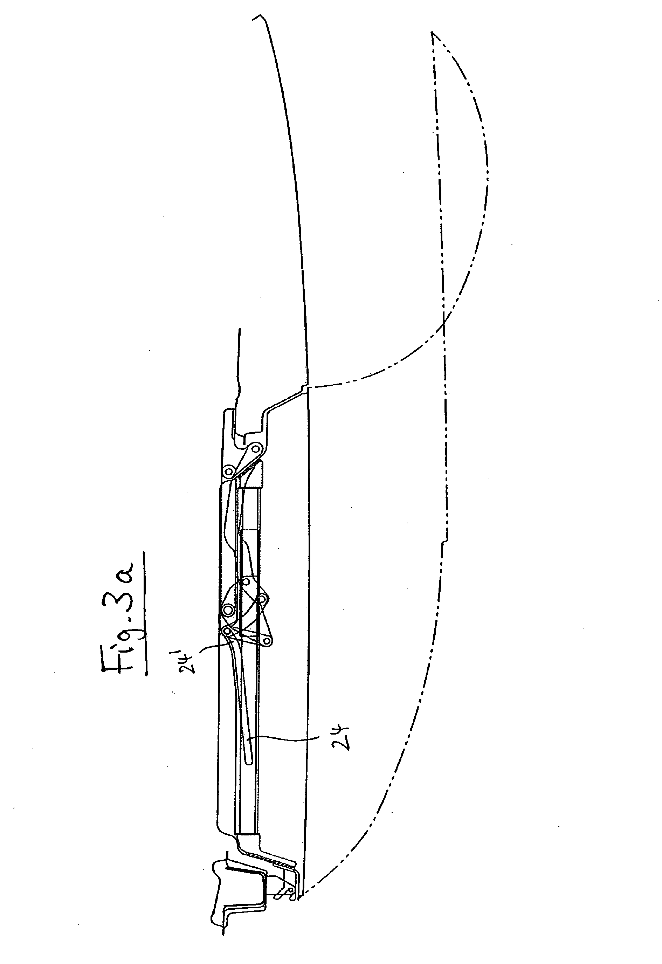

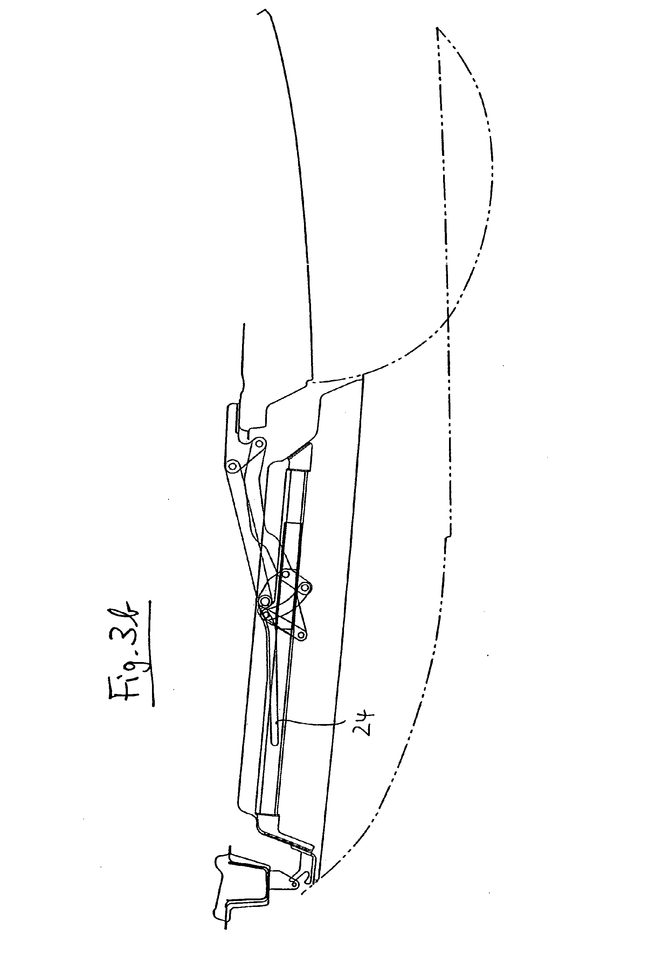

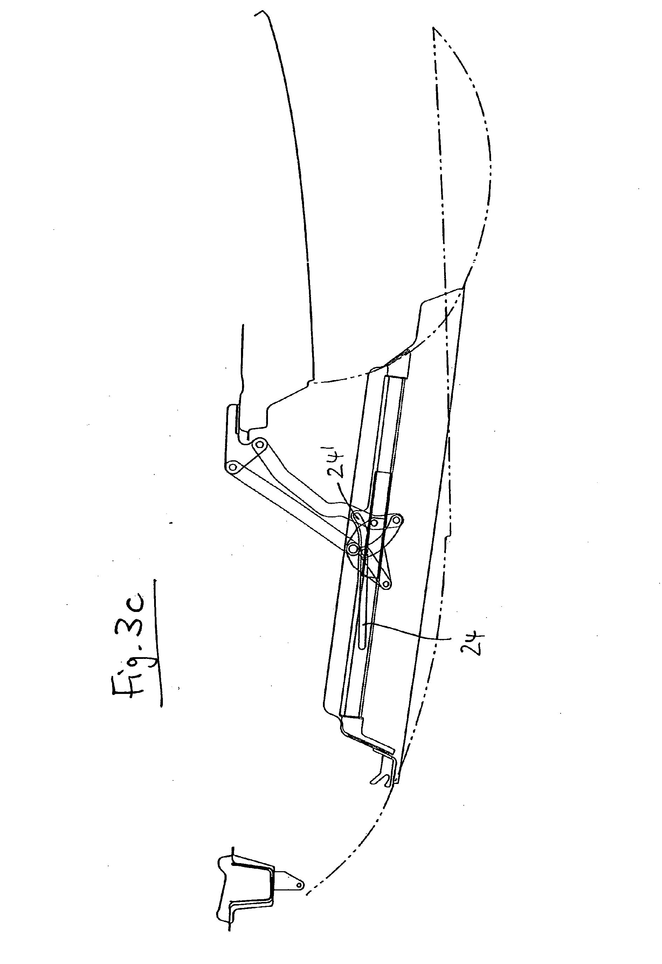

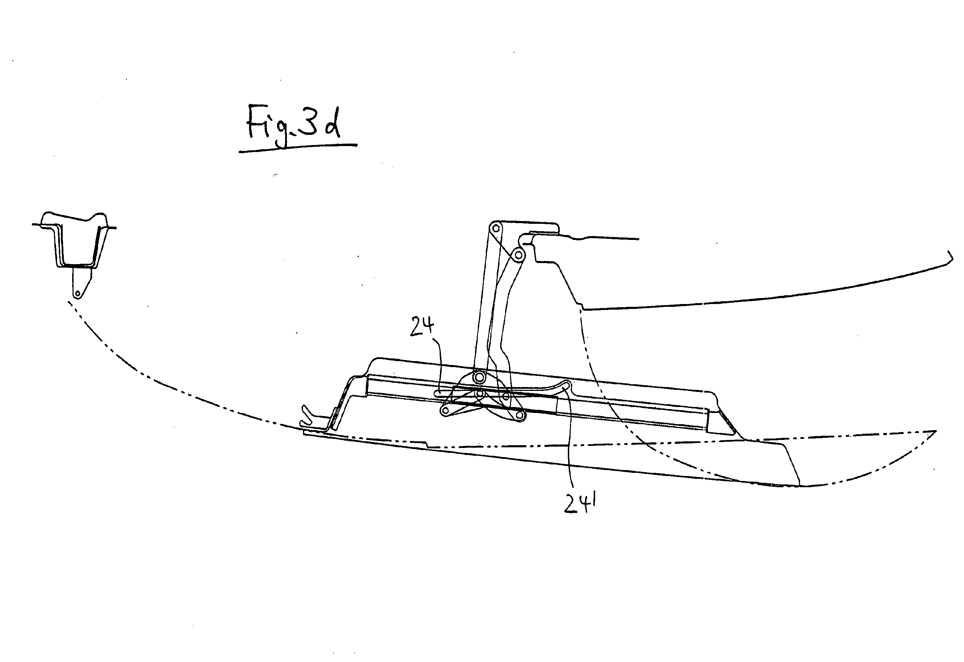

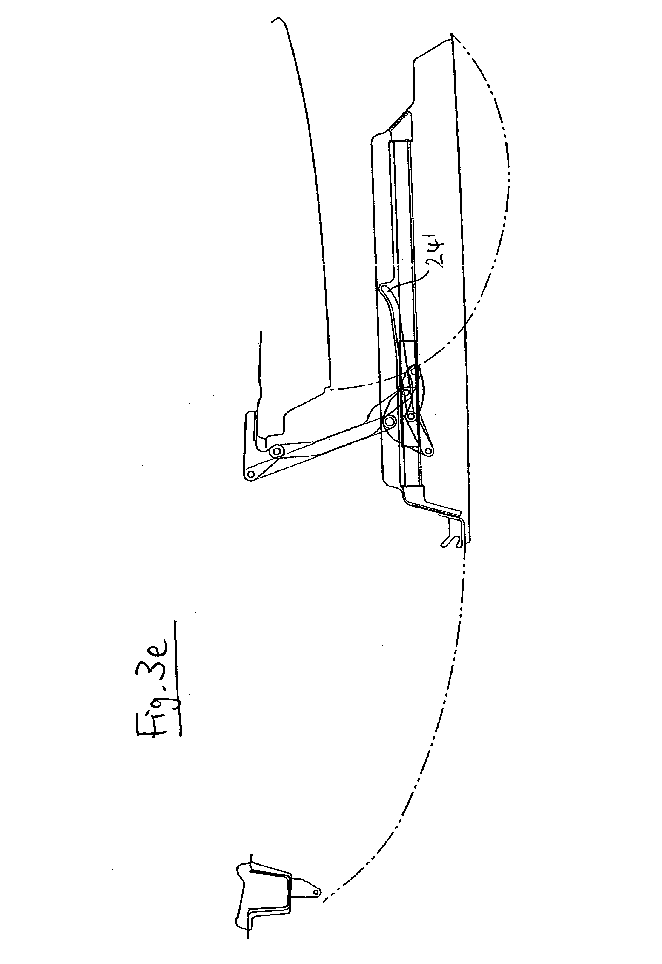

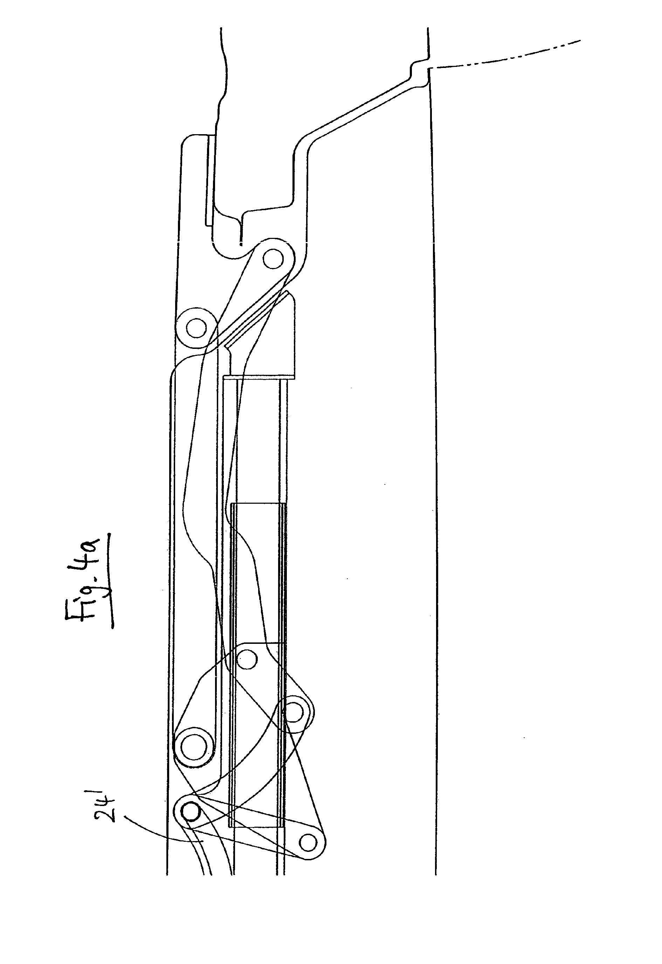

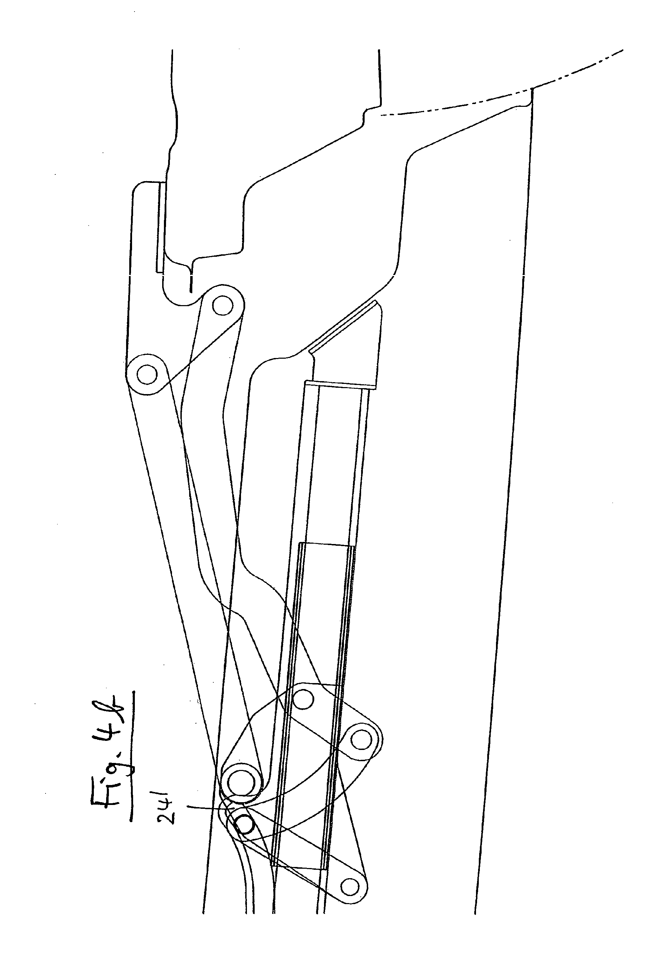

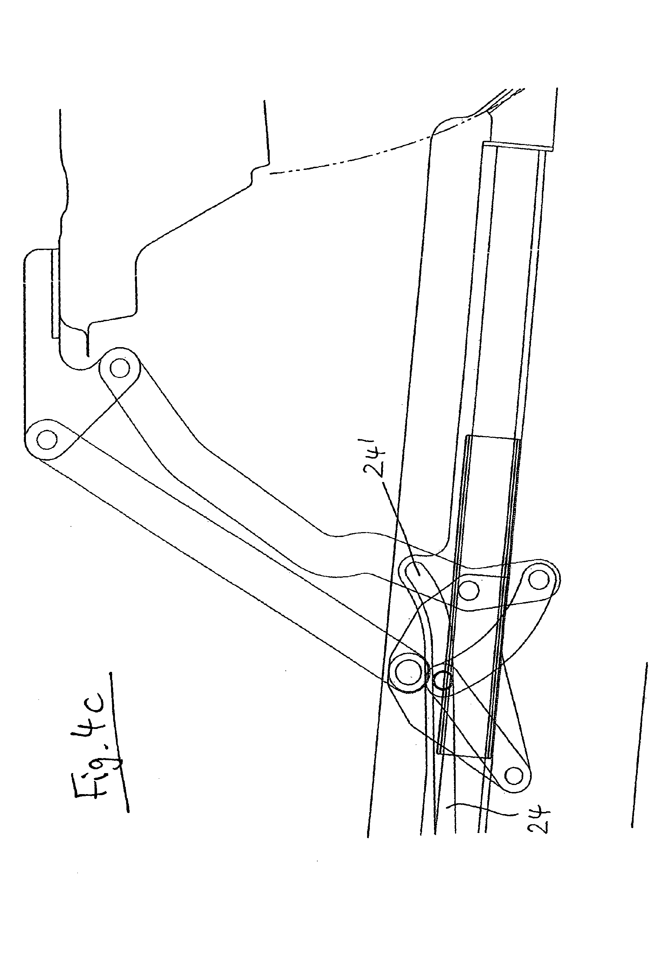

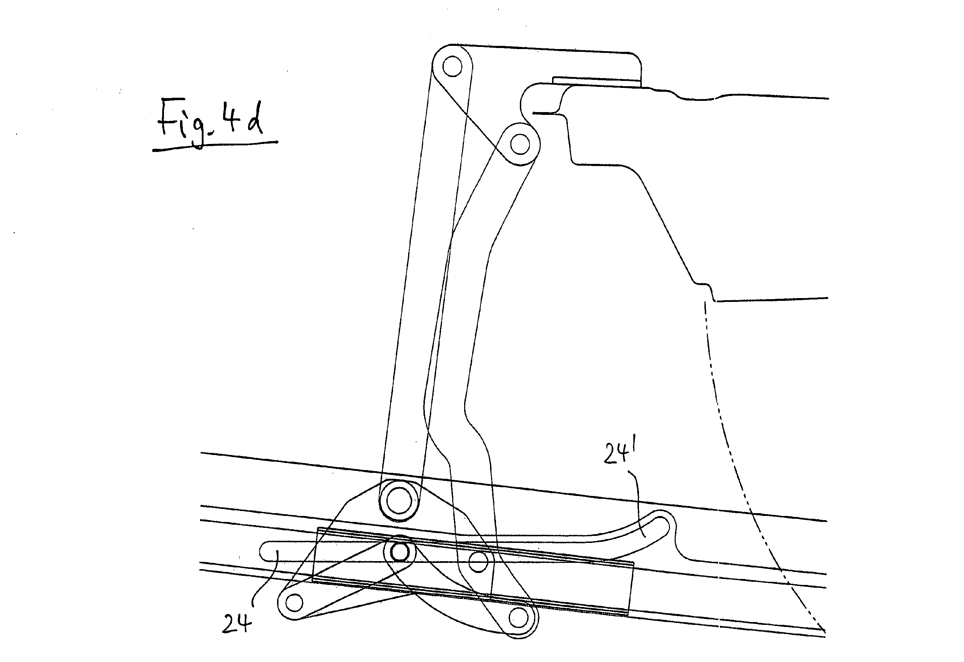

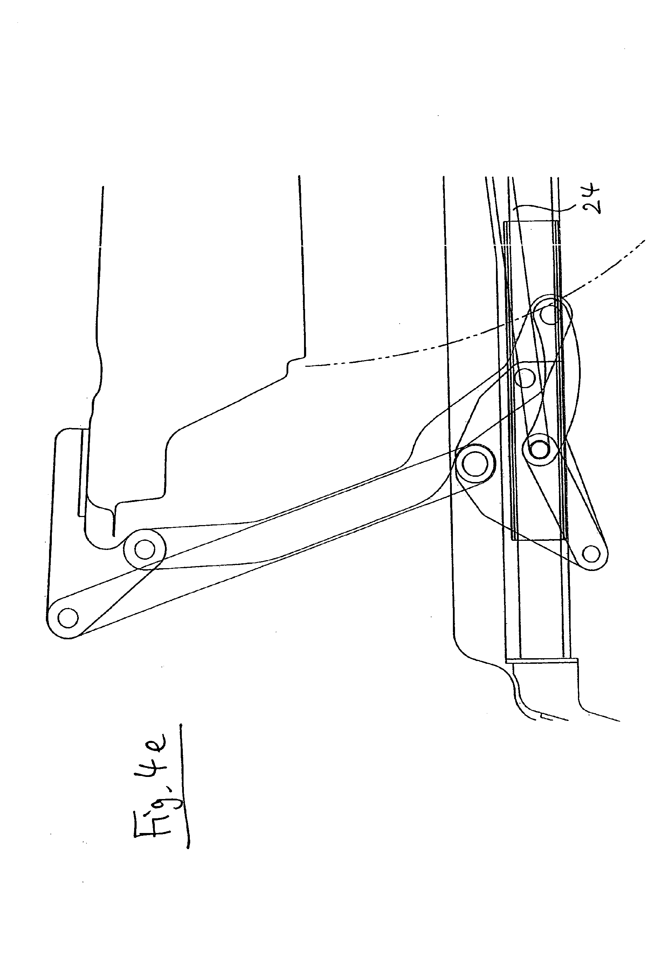

Fig. 3 und 4 zeigen eine Ausführungsform, bei der die Führungsbahn 24 an ihrem hinteren, inneren Ende einen gekrümmten Abschnitt 24' aufweist, dessen Neigung gegenüber der Führungsschiene 5 größer ist als der lineare Bereich. Hierdurch verläuft die Öffnungsbewegung des hinteren Endes 26 des äußeren Türblechs 27 aus der geschlossenen Stellung gemäß Fig. 3a in einem rechten Winkel, also noch steiler als bei Fig. 1a.

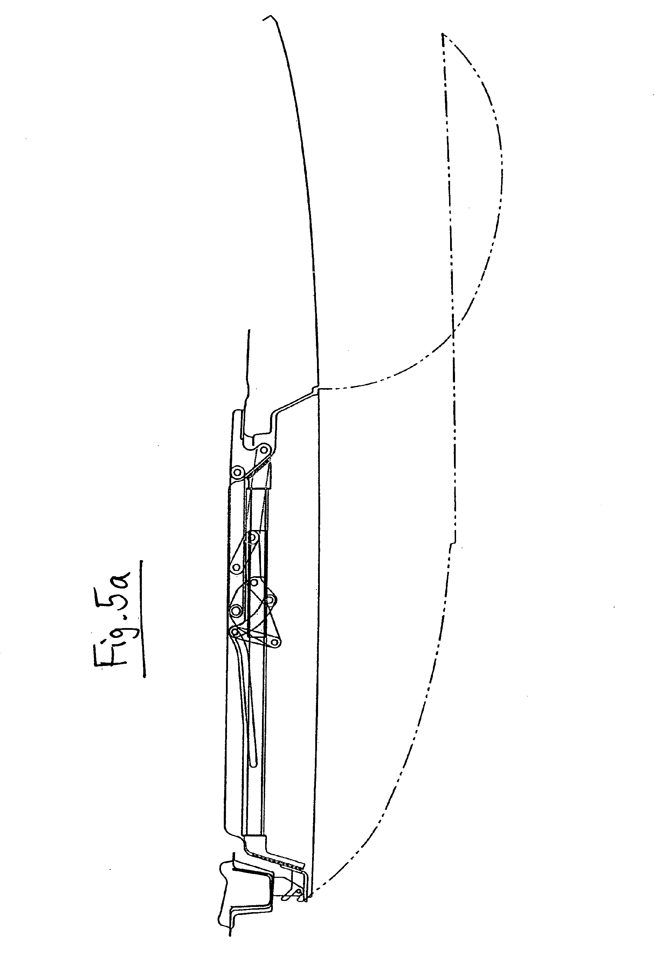

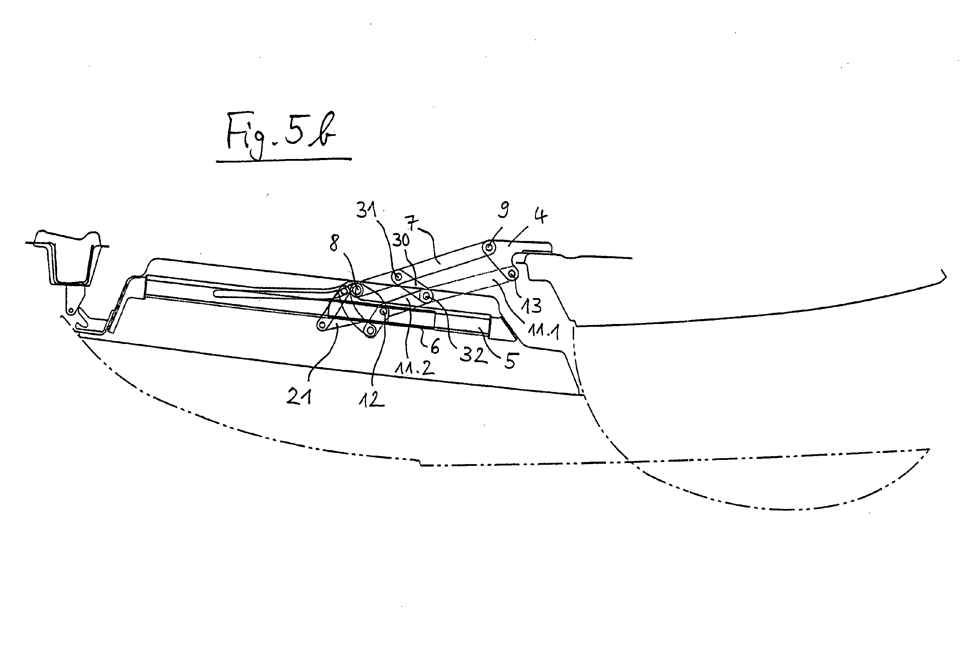

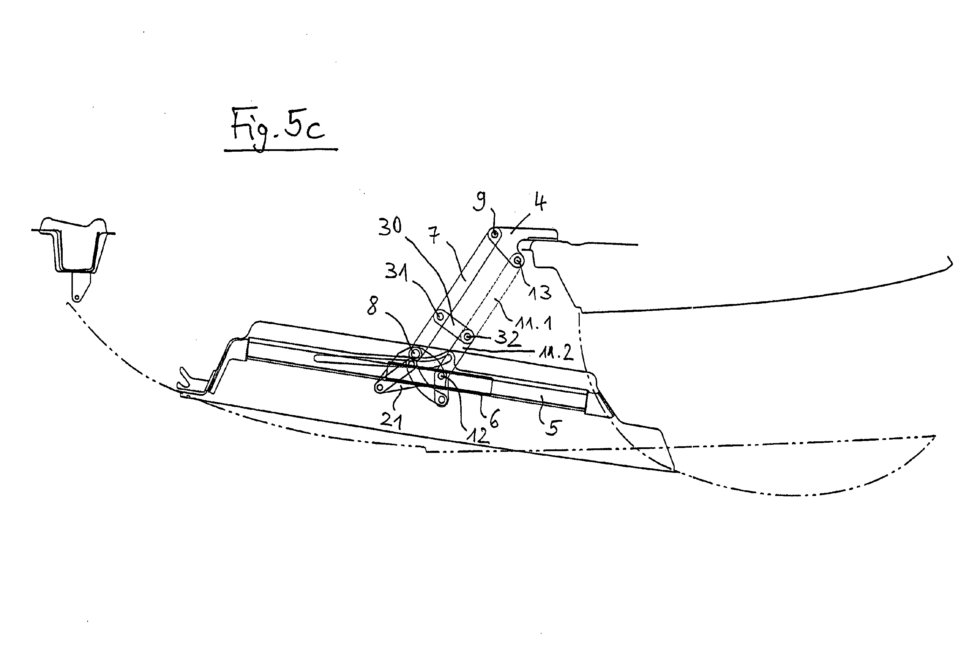

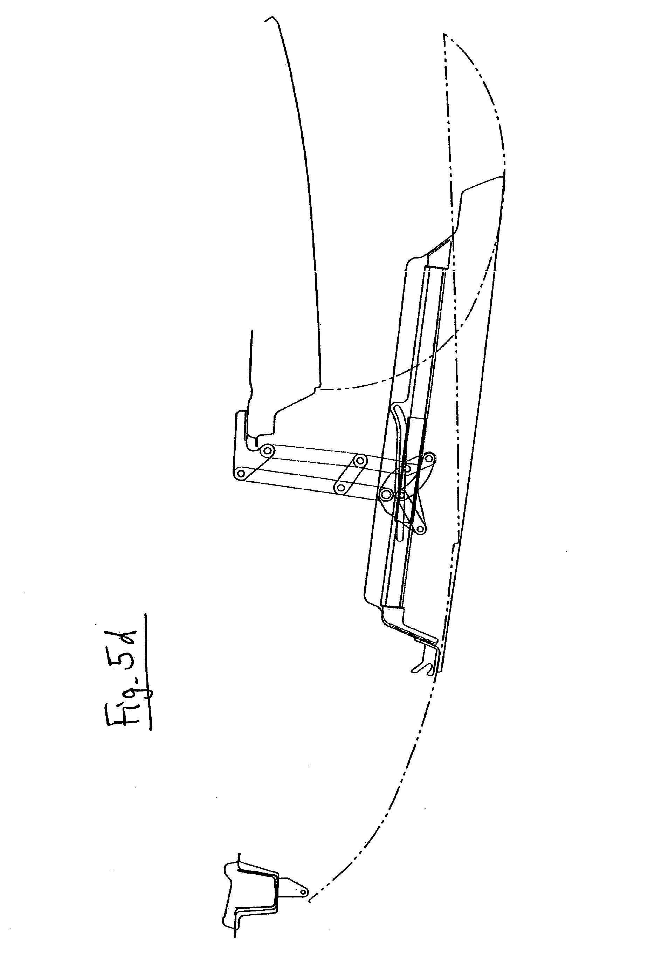

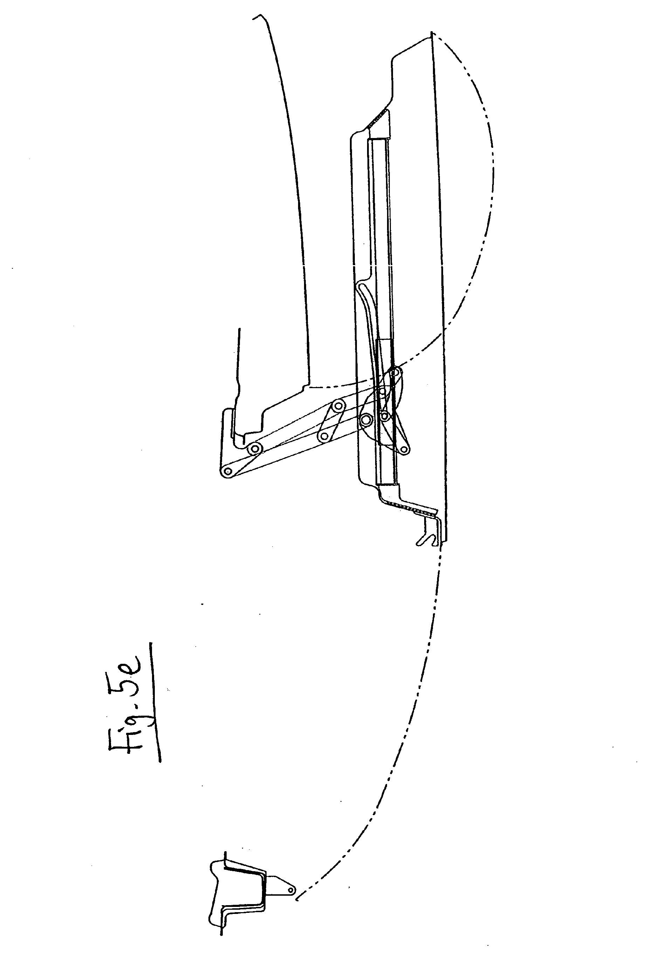

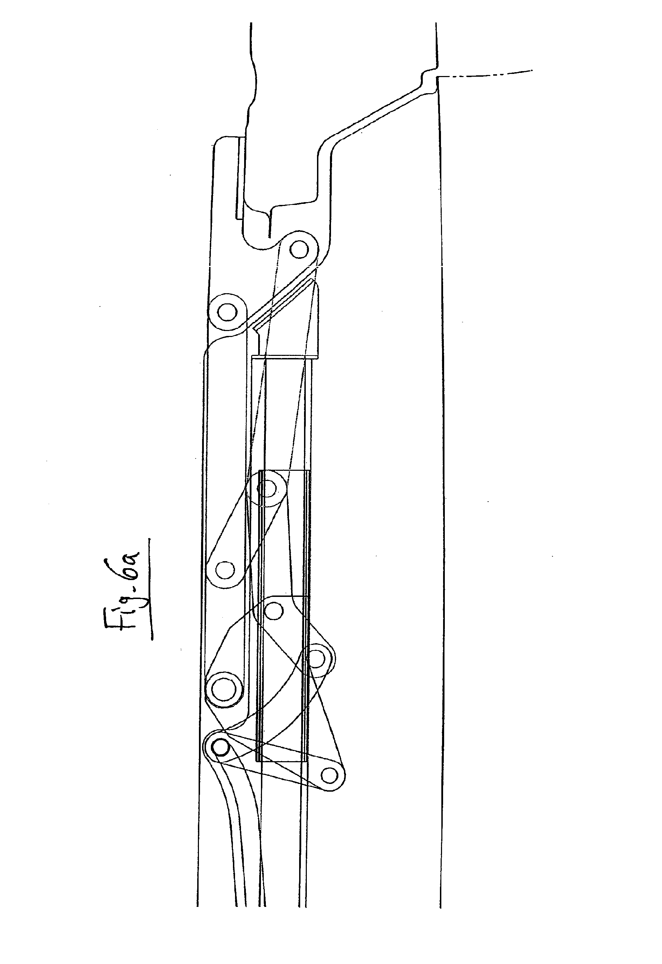

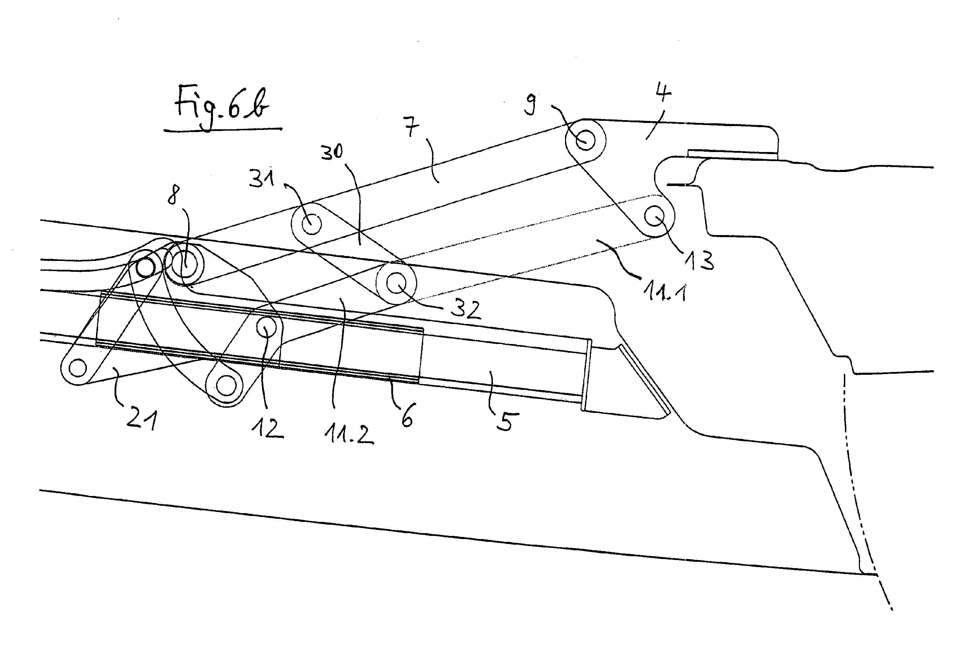

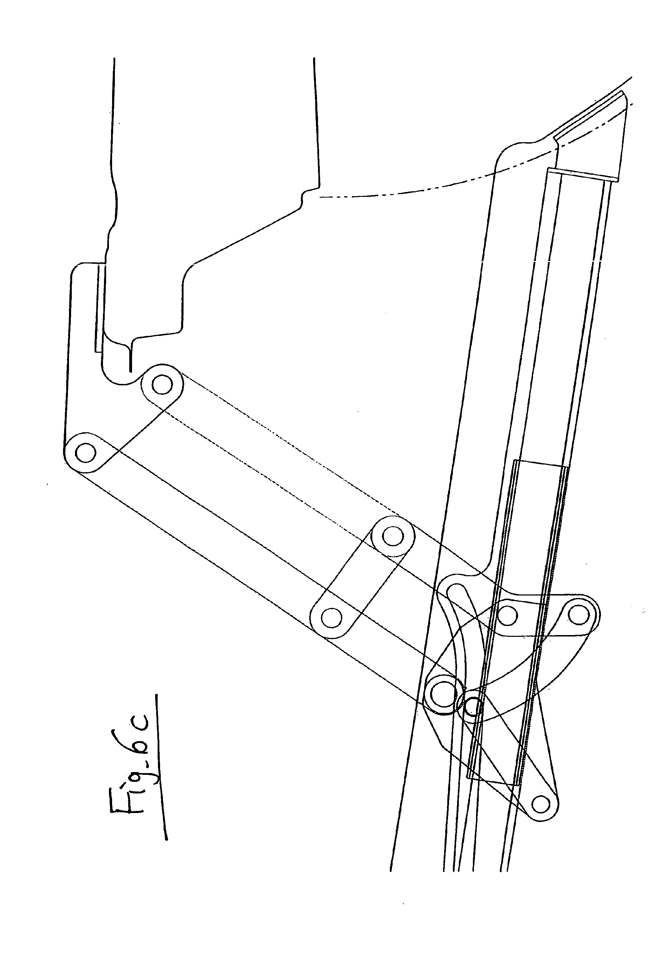

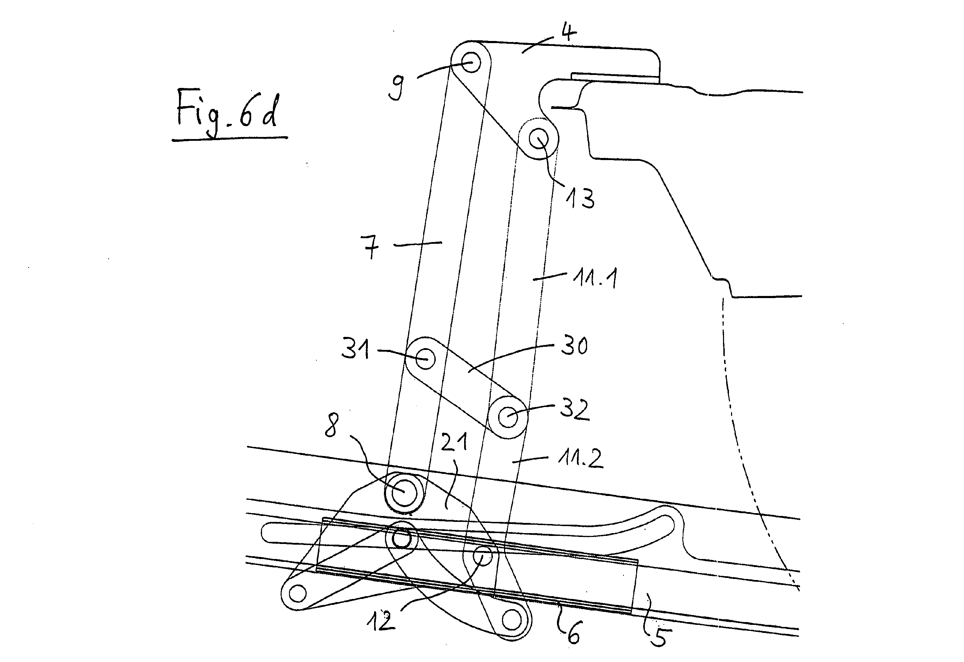

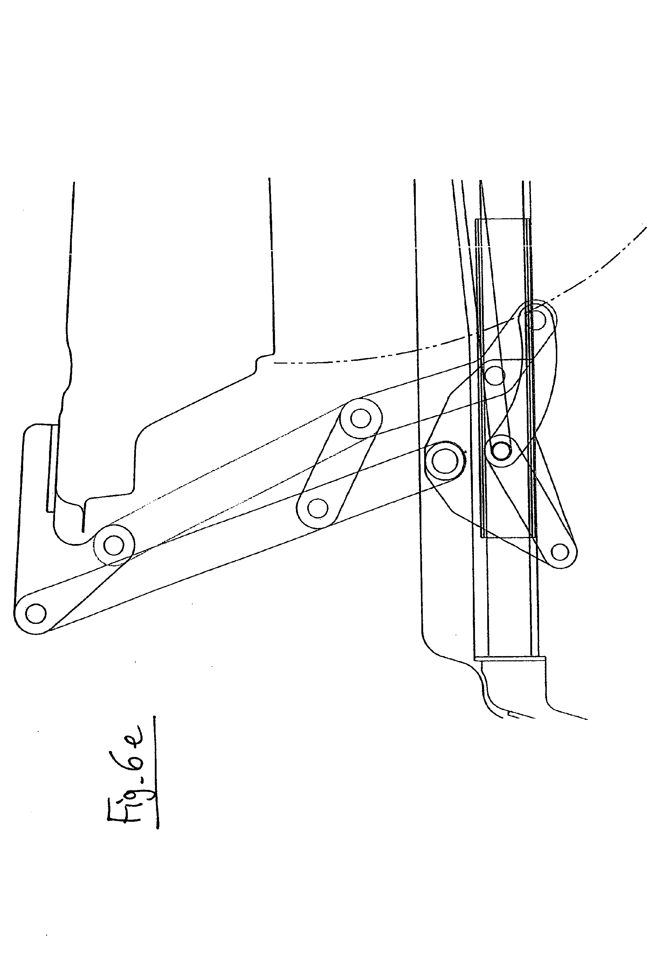

Bei der Ausführungsform nach Fig. 5 und 6 stimmt der Verlauf der Führungsbahn 24 mit demjenigen nach Fig. 3 und 4 überein. Im Unterschied zur Ausführungsform nach Fig. 3 und 4 ist allerdings bei der Ausführungsform nach Fig. 5 und 6 der Steuerhebel 11 zweigeteilt. Der Scharnierbügel 7 ist an dem Karosserieflansch 4 um das Gelenk 13 drehbar gelagert und an der Gelenkplatte 21 des Gleitschlittens 6 um das Gelenk 8 drehbar gelagert. Der erste Steuerhebel 11.1 ist an dem Karosserieflansch 4 um das Gelenk 13 drehbar gelagert. Der zweite Steuerhebel 11.2 ist an der Gelenkplatte 21 des Gleitschlittens 6 um das Gelenk 12 drehbar gelagert. Ferner ist ein Verbindungshebel 30 vorgesehen. Ein Ende des Verbindungshebels 30 ist mit dem Scharnierbügel 7 durch ein Gelenk 31 drehbar verbunden. Das andere Ende des Verbindungshebels 30 ist mit den jeweils anderen Enden der Steuerhebel 11.1, 11.2 durch ein Gelenk 32 drehbar verbunden. Der Scharnierbügel 7, die Steuerhebel 11.1, 11.2, der Karosserieflansch 4, die Gelenkplatte 21 und der Verbindungshebel 30 bilden ein Mehrgelenk, durch das die Gelenkplatte 21 und mit ihr der Gleitschlitten 6 zwangsgeführt wird.

## Patentansprüche

1. Schiebetüre für ein Fahrzeug mit
einer Führungsschiene (5),
einem Gleitschlitten (6), der an der Führungsschiene (5) längsverschieblich gelagert ist,
einem Scharnierbügel (7), der an dem Gleitschlitten (6) und an einem Karosserieflansch (4) drehbar (8, 9) gelagert ist,
einem Steuerhebel (11), der an dem Gleitschlitten (6) um ein erstes Gelenk (12) und an einem Karosserieflansch (4) um ein zweites Gelenk (13) drehbar (12, 13) gelagert ist,
einem ersten Zwischenhebel (10), der an dem Steuerhebel (11) drehbar (17) gelagert ist,
und einem zweiten Zwischenhebel (18), der an dem ersten Zwischenhebel (10) und an dem Gleitschlitten (6) drehbar (20, 19) gelagert ist,
**dadurch gekennzeichnet,**
**daß** der Steuerhebel (11) eine Verlängerung (22) aufweist, an der der erste Zwischenhebel (10) drehbar (17) gelagert ist, wobei die Verlängerung (22) den Steuerhebel (11) längs einer Verbindungslinie von dem zweiten Gelenk (13) zu dem ersten Gelenk (12) über das erste Gelenk (12) hinaus verlängert.

2. Schiebetüre nach Anspruch 1, **dadurch gekennzeichnet, daß** die Schiebetüre (1) an dem dem Scharnierbügel (7) abgewandten Ende arretierbar (14, 16) ist.

3. Schiebetüre nach einem der vorhergehenden Ansprüche, **dadurch gekennzeichnet, daß** an dem Verbindungsgelenk (20) des ersten Zwischenhebels (10) und des zweiten Zwischenhebels (18) ein Führungsstift (23) vorgesehen ist, der in einer an der Schiebetüre (1) vorgesehenen Führungsbahn (24) geführt ist.

4. Schiebetüre nach Anspruch 3, **dadurch gekennzeichnet, daß** die Führungsbahn (24) relativ zur Führungsschiene (5) geneigt verläuft.

5. Schiebetüre nach Anspruch 3 oder 4, **dadurch gekennzeichnet, daß** die Führungsbahn (24) in Richtung von dem Scharnierbügel (7) weg nach außen geneigt verläuft.

## Claims

1. A sliding door for a vehicle, comprising
a guide rail (5),
a sliding carriage (6) which is mounted on the guide rail (5) in a longitudinally movable manner,
a hinge stirrup (7) which is rotatably (8, 9) mounted on the sliding carriage (6) and on a body flange (4),
a control lever (11) which is rotatably (12, 13) mounted on the sliding carriage (6) about a first joint (12) and on a body flange (4) about a second joint (13),
a first intermediate lever (10) which is rotatably (17) mounted on the control lever (11), and
a second intermediate lever (18) which is rotatably (20, 19) mounted on the first intermediate lever (10) and on the sliding carriage (6),
**characterized in**
**that** the control lever (11) includes an extension (22) on which the first intermediate lever (10) is rotatably (17) mounted, wherein the extension (22) extends the control lever (11) beyond the first joint (12) along a connecting line from the second joint (13) to the first joint (12).

2. The sliding door according to claim 1, **characterized in that** the sliding door (1) can be locked (14, 16) at the end facing away from the hinge stirrup (7).

3. The sliding door according to any of the preceding claims, **characterized in that** a guide pin (23) is provided at the connecting joint (20) of the first intermediate lever (10) and of the second intermediate lever (18), which is guided in a guideway (24) provided at the sliding door (1).

4. The sliding door according to claim 3, **characterized in that** the guideway (24) extends with an inclination relative to the guide rail (5).

5. The sliding door according to claim 3 or 4, **characterized in that** the guideway (24) extends with an inclination in a direction away from the hinge stirrup (7) to the outside.

## Revendications

1. Portière coulissante pour un véhicule, comportant
un rail de guidage (5),
un chariot à glissières (6) qui est monté mobile dans le sens longitudinal sur le rail de guidage (5),
un étrier à charnière (7) qui est monté rotatif (8, 9) sur le chariot à glissières (6) et sur une bride de carrosserie (4),
un levier de commande (11) qui est monté rotatif (12, 13) sur le chariot à glissières (6) autour d'une première articulation (12) et sur une bride de carrosserie (4) autour d'une deuxième articulation (13),
un premier levier intermédiaire (10) qui est monté rotatif (17) sur le levier de commande (11),
et un deuxième levier intermédiaire (18) qui est monté rotatif (20, 19) sur le premier levier intermédiaire (10) et sur le chariot à glissières (6),
**caractérisée en ce que**
le levier de commande (11) présente un prolongement (22) sur lequel est monté rotatif (17) le premier levier intermédiaire (10), le prolongement (22) prolongeant le levier de commande (11) au-delà de la première articulation (12) le long d'une ligne de liaison depuis la deuxième articulation (13) jusqu'à la première articulation (12).

2. Portière coulissante selon la revendication 1, **caractérisée en ce que** la portière coulissante (1) peut être arrêtée à l'extrémité qui est détournée de l'étrier à charnière (7).

3. Portière coulissante selon l'une des revendications précédentes, **caractérisée en ce qu'**à l'articulation de liaison (20) du premier levier intermédiaire (10) et du deuxième levier intermédiaire (18), il est prévu une broche de guidage (23) qui est guidée dans une trajectoire de guidage (24) prévue sur la portière coulissante (1).

4. Portière coulissante selon la revendication 3, **caractérisée en ce que** la trajectoire de guidage (24) s'étend en inclinaison par rapport au rail de guidage (5).

5. Portière coulissante selon la revendication 3 ou 4, **caractérisée en ce que** la trajectoire de guidage (24) s'étend en inclinaison vers l'extérieur dans la direction s'éloignant de l'étrier à charnière (7).
